# FASCICULE DE BREVET EUROPEEN

(11) **EP 2 150 462 B1**
(45) Date de publication et mention de la délivrance du brevet: **11.05.2011**
(21) Numéro de dépôt: 08750359.5
(22) Date de dépôt: 21.05.2008
(51) Int. Cl.: B64D 27/06, B64D 27/26

(54) **MAT D'ACCROCHAGE DE MOTEUR POUR AERONEF COMPRENANT UNE CALE BIAISE POUR LA FIXATION DE L'ATTACHE MOTEUR AVANT**
KOPPLUNGSMAST EINES FLUGZEUGTRIEBWERKS MIT DISTANZSTÜCK ZUR BEFESTIGUNG DER VORDERTRIEBWERKSAUFHÄNGUNG
AIRCRAFT ENGINE COUPLING PYLON COMPRISING A SLANTING SPACER FOR FASTENING THE FRONT ENGINE ATTACHMENT

(30) Priorité: 23.05.2007 FR 0755211
(43) Date de publication de la demande: 10.02.2010
(73) Titulaire: AIRBUS OPERATIONS, 31060 Toulouse (FR)
(72) Inventeur: FOYER, Laurent, F-81370 Saint Sulpice Sur Tarn (FR); MENOU, Fabien, F-31500 Toulouse (FR); COMBES, Stéphane, F-31660 Buzet sur Tarn (FR)
(74) Mandataire: Ilgart, Jean-Christophe
(86) Numéro de dépôt international: PCT/EP2008/056238
(87) Numéro de publication internationale: WO 2008/142098

(56) Documents cités:
- EP-A- 1 231 138
- WO-A-2006/097484
- FR-A- 2 295 876
- FR-A- 2 887 521

## Description

### DOMAINE TECHNIQUE

La présente invention se rapporte de façon générale à un ensemble moteur pour aéronef, du type comprenant un moteur, un mât d'accrochage, ainsi qu'un système de montage du moteur pourvu d'une pluralité d'attaches moteur et étant interposé entre une structure rigide du mât d'accrochage et le moteur.

L'invention se rapporte également à un tel mât d'accrochage de moteur d'aéronef.

L'invention peut être utilisée sur tout type d'aéronef équipé par exemple de turboréacteurs ou de turbopropulseurs.

Ce type de mât d'accrochage, également appelé « EMS » (de l'anglais « Engine Mounting Structure »), permet par exemple de suspendre un turbomoteur au-dessous de la voilure de l'aéronef, ou bien de monter ce turbomoteur au-dessus de cette même voilure.

### ÉTAT DE LA TECHNIQUE ANTÉRIEURE

Un tel mât d'accrochage est en effet prévu pour constituer l'interface de liaison entre un moteur tel qu'un turboréacteur et une voilure de l'aéronef. Il permet de transmettre à la structure de cet aéronef les efforts générés par son turboréacteur associé, et autorise également le cheminement du carburant, des systèmes électriques, hydrauliques, et air entre le moteur et l'aéronef.

Afin d'assurer la transmission des efforts, le mât comporte une structure rigide, souvent du type « caisson », c'est-à-dire formée par l'assemblage de longerons supérieur et inférieur et de deux panneaux latéraux raccordés entre eux par l'intermédiaire de nervures transversales.

D'autre part, le mât est muni d'un système de montage du moteur interposé entre le turboréacteur et la structure rigide du mât, ce système comportant globalement au moins deux attaches moteur, généralement une attache avant et une attache arrière.

De plus, le système de montage comprend un dispositif de reprise des efforts de poussée générés par le turboréacteur. Dans l'art antérieur, ce dispositif prend par exemple la forme de deux bielles latérales raccordées d'une part à une partie arrière du carter de soufflante du turboréacteur, et d'autre part à l'attache moteur arrière fixée sur le carter de ce dernier.

De la même façon, le mât d'accrochage comporte également un second système de montage interposé entre la structure rigide de ce mât et la voilure de l'aéronef, ce second système étant habituellement composé de deux ou trois attaches.

Enfin, le mât est pourvu d'une structure secondaire assurant la ségrégation et le maintien des systèmes tout en supportant des carénages aérodynamiques.

Dans certaines réalisations de l'art antérieur, cf. WO 2006/097484, le système de montage du moteur comporte une attache avant, dite attache de soufflante en raison du fait qu'elle est destinée à être montée fixement sur le carter de soufflante du moteur, qui comporte un corps d'attache disposant d'une surface de fixation horizontale plaquée contre une surface de fixation horizontale de la structure rigide. L'interface de fixation horizontale formée par ces deux surfaces s'étend donc selon un plan défini par les directions longitudinale et transversale du mât d'accrochage, et se situe généralement au niveau d'une surface externe du longeron inférieur du caisson dans le cas où le moteur est destiné à être suspendu sous la voilure de l'aéronef. En effet, le corps d'attache de l'attache moteur avant est généralement fixé sur le longeron inférieur du caisson, en étant agencé sous celui-ci.

Cet agencement présente un inconvénient non négligeable qui est que l'extrémité avant du longeron inférieur doit être agencée de manière horizontale, afin de former au moins partiellement la surface de fixation précitée. Or cela engendre nécessairement la présence d'une cassure sur le longeron inférieur, étant donné que ce dernier s'étend ensuite vers l'arrière de façon inclinée par rapport à l'horizontale, en particulier dans le but de se rapprocher du carter d'éjection afin de permettre la mise en place de l'attache moteur arrière fixée sur ce même carter ou à proximité.

La présence de la cassure sur le longeron inférieur implique l'apparition de contraintes mécaniques importantes au niveau de celle-ci, pouvant conduire à un surdimensionnement de certains éléments du mât d'accrochage, pénalisant en termes de coût et de masse.

### EXPOSÉ DE L'INVENTION

L'invention a donc pour but de proposer un mât d'accrochage de moteur pour aéronef remédiant à l'inconvénient mentionné ci-dessus relatif aux réalisations de l'art antérieur.

Pour ce faire, l'invention a pour objet un mât d'accrochage pour moteur d'aéronef, ledit mât comportant une structure rigide formant un caisson pourvu d'un longeron incliné par rapport à l'horizontale, ainsi qu'un système de montage du moteur monté fixement sur ladite structure rigide et comportant notamment une attache moteur avant comprenant un corps d'attache pourvu d'une surface de fixation horizontale plaquée contre une surface de fixation horizontale de ladite structure rigide. Selon l'invention, ladite surface de fixation horizontale de ladite structure rigide est définie par une cale biaise montée sur ledit longeron incliné, extérieurement par rapport audit caisson.

Avantageusement, il ressort de la définition de l'invention indiquée ci-dessus que la structure rigide a été modifiée par rapport à celles rencontrées antérieurement de façon à ce que la surface de fixation horizontale, définie par la structure rigide et destinée à recevoir le corps d'attache de l'attache avant, ne soit plus définie par la surface externe du longeron du caisson, mais par une cale biaise rapportée sur cette même surface externe. A titre indicatif, dans le cas préféré où le mât est destiné à assurer la suspension du moteur sous la voilure de l'aéronef, le longeron concerné est le longeron inférieur du caisson, qui est incliné par rapport à l'horizontale de manière à se rapprocher de l'axe du moteur en allant vers l'arrière, afin de permettre la fixation de l'attache moteur arrière.

L'invention permet ainsi, de manière avantageuse, de ne pas nécessiter de cassure du longeron inférieur au niveau de son extrémité avant, étant donné que la formation de la surface de fixation horizontale de la structure rigide s'effectue astucieusement avec la cale biaise, rapportée fixement sous ce longeron inférieur incliné. Par conséquent, toute la partie avant du longeron inférieur incliné peut être plane, et, de préférence, toute la partie du longeron inférieur située entre l'attache moteur avant et l'attache moteur arrière. Encore plus préférentiellement, c'est l'intégralité du longeron inférieur incliné qui est plan, à savoir d'un bout à l'autre de la structure rigide dans la direction longitudinale du mât d'accrochage.

L'absence de cassure sur le longeron assure un meilleur transfert des efforts à travers le caisson, et permet la réalisation d'un longeron plan plus facile et moins coûteux à fabriquer qu'un longeron à cassure.

De préférence, la surface de fixation horizontale de la structure rigide est entièrement constituée par la cale biaise, qui présente par exemple trois ou quatre points d'appui de définition de cette surface. Les points d'appui prévus sur la cale offrent des caractéristiques de planéité extrêmement satisfaisantes. De plus, la surface de fixation horizontale de la structure rigide s'étend de préférence entièrement sous le longeron inférieur incliné, sans faire saillie de celui-ci latéralement. Cela permet avantageusement de ne pas augmenter la largeur de l'extrémité avant du caisson, et donc de ne pas pénaliser aérodynamiquement le mât d'accrochage.

De plus, la hauteur de l'extrémité avant du caisson peut également être conservée à une dimension relativement faible, permettant d'aboutir à un mât de conception simple et d'aspect compact, générant que très peu de perturbations aérodynamiques.

De préférence, ladite structure rigide comprend une nervure de fermeture avant du caisson, des moyens de fixation de la cale biaise sur ledit longeron incliné traversant ladite nervure de fermeture avant. Cette particularité permet d'assurer une excellente introduction des efforts dans le caisson, puisqu'ils sont directement introduits dans la nervure de fermeture avant.

De préférence, lesdits moyens de fixation de la cale biaise sur ledit longeron incliné comprennent des boulons de traction verticaux traversant successivement le corps d'attache, la cale biaise, ledit longeron incliné et la nervure de fermeture avant du caisson. Néanmoins, il est noté que ces boulons de traction verticaux permettent essentiellement d'effectuer la liaison entre l'attache moteur avant et la structure rigide du mat d'accrochage, et qu'ils participent indirectement à la liaison de la cale biaise sur le longeron incliné.

Par ailleurs, ladite attache moteur avant comporte au moins un pion de cisaillement vertical traversant successivement le corps d'attache, la cale biaise, ledit longeron incliné et la nervure de fermeture avant du caisson.

Comme mentionné précédemment, dans le cas préféré où le mât est destiné à assurer la suspension du moteur sous la voilure de l'aéronef, le longeron concerné est le longeron inférieur incliné du caisson. Naturellement, dans l'autre cas où le moteur est destiné à être rapporté au-dessus de la voilure, le longeron concerné est le longeron supérieur incliné du caisson, le longeron concerné étant en effet toujours celui des deux qui est le plus rapproché du moteur et portant les attaches moteur.

De préférence, la nervure de fermeture avant du caisson dispose d'un flanc inférieur plaqué contre une extrémité avant du longeron inférieur incliné, et d'un flanc supérieur plaqué contre une extrémité avant d'un longeron supérieur de la structure rigide formant caisson.

Dans un tel cas, on prévoit que ladite extrémité avant du longeron inférieur incliné s'étend vers l'avant au-delà de ladite extrémité avant du longeron supérieur, les axes des boulons de traction verticaux étant tels qu'ils traversent ladite extrémité avant du longeron inférieur sans traverser ladite extrémité avant du longeron supérieur. Cette spécificité permet de faciliter l'opération de serrage des boulons, puisque l'extrémité avant du longeron supérieur, décalée vers l'arrière, ne constitue aucune gêne pour la mise en oeuvre d'un tel serrage par le dessus.

De préférence, l'attache moteur avant est conçue de manière à assurer la reprise des efforts s'exerçant selon une direction transversale du mât, et selon la direction verticale de celui-ci.

Par ailleurs, le système de montage du moteur, qui est de préférence un système isostatique, comporte en outre un dispositif de reprise des efforts de poussée, ainsi qu'une attache moteur arrière conçue de manière à assurer la reprise des efforts s'exerçant selon les directions transversale et verticale du mât.

L'invention a également pour objet un ensemble moteur pour aéronef comprenant un mât tel que celui qui vient d'être présenté, ainsi qu'un moteur fixé sur ce mât.

Enfin, elle a pour objet un aéronef comprenant au moins un tel ensemble moteur.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue partiellement schématique de côté d'un ensemble moteur pour aéronef comportant un mât d'accrochage selon un mode de réalisation préféré de la présente invention ;
- la figure 2 représente une vue en perspective schématisant la reprise des efforts effectuée par le système de montage du moteur équipant le mât d'accrochage montré sur la figure 1 ;
- la figure 3 représente une vue détaillée en perspective de la partie avant du mât montré sur la figure 1 ;
- la figure 4 représente une vue éclatée de celle montrée sur la figure 3, avec un angle de vue différent ;
- la figure 5 représente une vue en coupe passant par le plan P1 de la figure 3 ;
- la figure 6 représente une vue en coupe passant par le plan P2 de la figure 3 ;
- la figure 7 représente une vue détaillée en perspective de la partie avant d'un mât selon un autre mode de réalisation préféré ;
- la figure 8 représente une vue éclatée de celle montrée sur la figure 7, avec un angle de vue différent ;
- la figure 9 représente une vue en coupe passant par le plan P3 de la figure 7 ; et
- la figure 10 représente une vue en coupe passant par le plan P4 de la figure 7.

### EXPOSÉ DÉTAILLÉ DE MODES DE RÉALISATION PRÉFÉRÉS

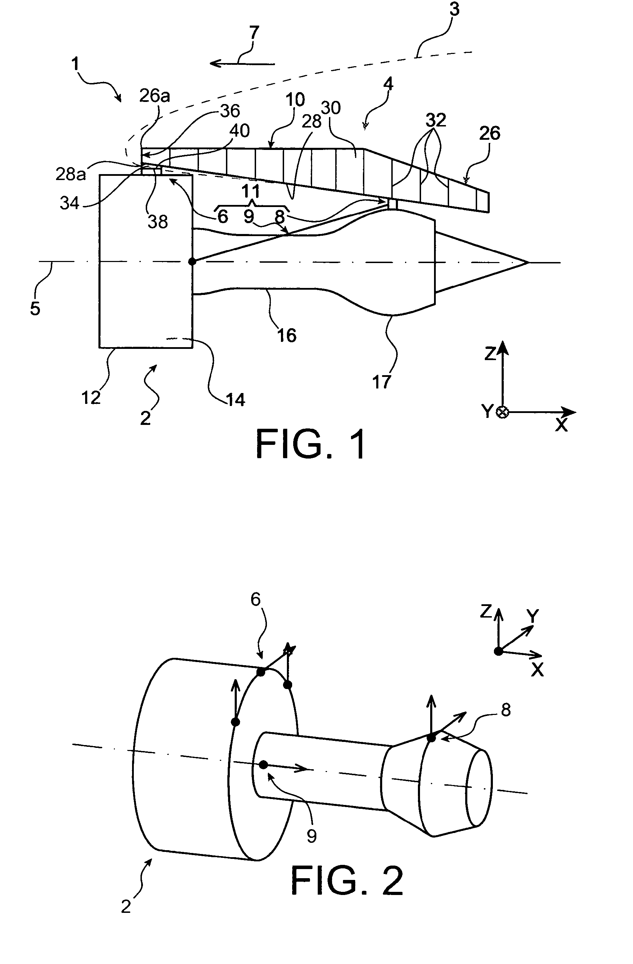

En référence à la figure 1, on voit un ensemble moteur 1 pour aéronef destiné à être fixé sous une aile 3 de cet aéronef, cet ensemble 1 objet de la présente invention étant pourvu d'un mât d'accrochage 4 se présentant sous la forme d'un mode de réalisation préféré de la présente invention.

Globalement, l'ensemble moteur 1 comporte un moteur tel qu'un turboréacteur 2 et le mât d'accrochage 4, ce dernier étant notamment muni d'une structure rigide 10 et d'un système de montage du moteur 11 composé d'une pluralité d'attaches moteur 6, 8 et d'un dispositif de reprise des efforts de poussée 9 généré par le turboréacteur 2, le système de montage 11 étant donc interposé entre le moteur et la structure rigide 10 précitée. A titre indicatif, il est noté que l'ensemble 1 est destiné à être entouré d'une nacelle (non représentée sur cette figure), et que le mât d'accrochage 4 comporte une autre série d'attaches (non représentées) permettant d'assurer la suspension de cet ensemble 1 sous la voilure de l'aéronef.

Dans toute la description qui va suivre, par convention, on appelle X la direction longitudinale du mât 4 qui est également assimilable à la direction longitudinale du turboréacteur 2, cette direction X étant parallèle à un axe longitudinal 5 de ce turboréacteur 2. D'autre part, on appelle Y la direction orientée transversalement par rapport au mât 4 et également assimilable à la direction transversale du turboréacteur 2, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par le turboréacteur 2, cette direction étant représentée schématiquement par la flèche 7.

Sur la figure 1, on peut voir que seuls le dispositif de reprise 9, les attaches moteur 6, 8, et la structure rigide 10 du mât d'accrochage 4 ont été représentées. Les autres éléments constitutifs non représentés de ce mât 4, tels que les moyens d'accrochage de la structure rigide 10 sous la voilure de l'aéronef, ou encore la structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

Le turboréacteur 2 dispose à l'avant d'un carter de soufflante 12 de grande dimension délimitant un canal annulaire de soufflante 14, et comporte vers l'arrière un carter central 16 de plus petite dimension, renfermant le coeur de ce turboréacteur. Enfin, le carter central 16 se prolonge vers l'arrière par un carter d'éjection 17 de plus grande dimension que celle du carter 16. Les carters 12, 16 et 17 sont bien entendu solidaires les uns des autres.

Comme on peut l'apercevoir sur la figure 1, la pluralité d'attaches moteur est constituée par une attache moteur avant 6 et une attache moteur arrière 8, l'attache avant 6 étant de conception classique et connue de l'art antérieur, à savoir par exemple du type disposant d'un corps d'attache sous forme de ferrure ou de poutre aux extrémités latérales de laquelle sont respectivement articulées deux manilles/biellettes. Le dispositif de reprise 9 prend par exemple la forme de deux bielles latérales (une seule étant visible en raison de la vue de côté) raccordées d'une part à une partie arrière du carter de soufflante 12 ou à une partie avant du carter central 16, et d'autre part sur un palonnier, lui-même monté sur l'attache arrière 8.

L'attache moteur avant 6, dont le positionnement spécifique à la présente invention sera décrit ci-après, est solidarisée au carter de soufflante 12, et est conçue de manière à pouvoir reprendre des efforts générés par le turboréacteur 2 selon les directions Y et Z, à l'aide des deux manilles/biellettes. A titre indicatif, cette attache avant 6 pénètre de préférence dans une portion d'extrémité circonférentielle du carter de soufflante 12.

L'attache moteur arrière 8 est globalement interposée entre le carter d'éjection 17 et la structure rigide 10 du mât. Elle est conçue classiquement de manière à pouvoir reprendre des efforts générés par le turboréacteur 2 selon les direction Y et Z, mais pas ceux s'exerçant selon la direction X.

De cette manière, avec le système de montage 11 de nature isostatique, comme cela est montré schématiquement sur la figure 2, la reprise des efforts s'exerçant selon la direction X s'effectue à l'aide du dispositif 9, la reprise des efforts s'exerçant selon la direction Y s'effectue à l'aide de l'attache avant 6 et de l'attache arrière 8, et la reprise des efforts s'exerçant selon la direction Z s'effectue également conjointement à l'aide des attaches 6 et 8. D'autre part, la reprise du moment s'exerçant selon la direction X s'effectue verticalement à l'aide de l'attache avant 6, la reprise du moment s'exerçant selon la direction Y s'effectue verticalement à l'aide de l'attache avant 6 conjointement avec l'attache 8, et la reprise du moment s'exerçant selon la direction Z s'effectue transversalement également à l'aide de l'attache 6 et de l'attache 8.

Toujours en référence à la figure 1, on peut apercevoir que la structure 10 présente la forme d'un caisson s'étendant dans la direction X, ce caisson étant également appelé caisson de torsion. Il est classiquement formé par un longeron supérieur 26 et un longeron inférieur 28, ainsi que par deux panneaux latéraux 30 (un seul étant visible sur la figure 1) s'étendant tous les deux selon la direction X et sensiblement dans un plan XZ. A l'intérieur de ce caisson, des nervures transversales 32 agencées selon des plans YZ et espacées longitudinalement viennent renforcer la rigidité du caisson. Il est noté à titre indicatif que les éléments 26, 28 et 30 peuvent chacun être réalisés d'un seul tenant, ou bien par l'assemblage de sections jointives, qui peuvent éventuellement être légèrement inclinées les unes par rapport aux autres. Néanmoins, l'une des particularités réside ici dans le fait que le longeron inférieur 28 s'étend dans un plan incliné par rapport à l'horizontale, sur toute sa longueur, comme montré sur la figure 1. L'inclinaison est telle que le longeron inférieur 28, parallèle à la direction Y, se rapproche de l'axe 5 en allant vers l'arrière, dans le but de se rapprocher du carter d'éjection 17 afin de permettre la mise en place de l'attache moteur arrière 8 supportée par ce longeron 28.

A nouveau en référence à la figure 1 montrant un cas où le moteur 2 est destiné à être suspendu sous la voilure 3, il est prévu que la structure 10 soit équipée d'une nervure de fermeture avant 36 du caisson, raccordant entre elles l'extrémité avant 26a du longeron supérieur 26 et l'extrémité avant 28a du longeron inférieur 28. Au droit de cette nervure 36, il est prévu une cale biaise 34 plaquée sur la surface externe de l'extrémité avant 28a du longeron inférieur incliné 28, et montée fixement sous ce même longeron, donc extérieurement par rapport au caisson. La cale biaise 34 a pour fonction principale de définir à l'aide de sa portion inférieure une surface de fixation horizontale 38 destinée à recevoir le corps d'attache de l'attache moteur avant 6. Plus précisément, la surface 38 est destinée à être montée fixement et en appui contre une surface de fixation horizontale 40 du corps d'attache de l'attache moteur avant 6, également dénommé poutre d'attache moteur avant 6, les deux surfaces en contact 38, 40 étant donc agencées sensiblement selon un plan XY.

Ainsi, La cale biaise 34 sert d'interface entre le longeron inférieur incliné 28 et la poutre de l'attache moteur avant, et permet le rattrapage de l'angle du longeron inférieur 28, ainsi que l'ajustement de la hauteur entre la structure rigide 10 et la poutre de l'attache moteur avant 6.

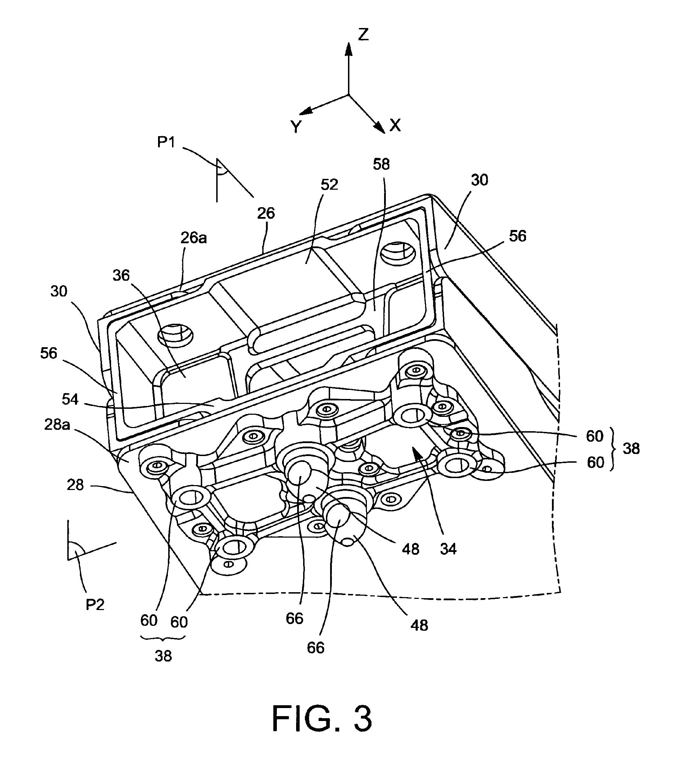

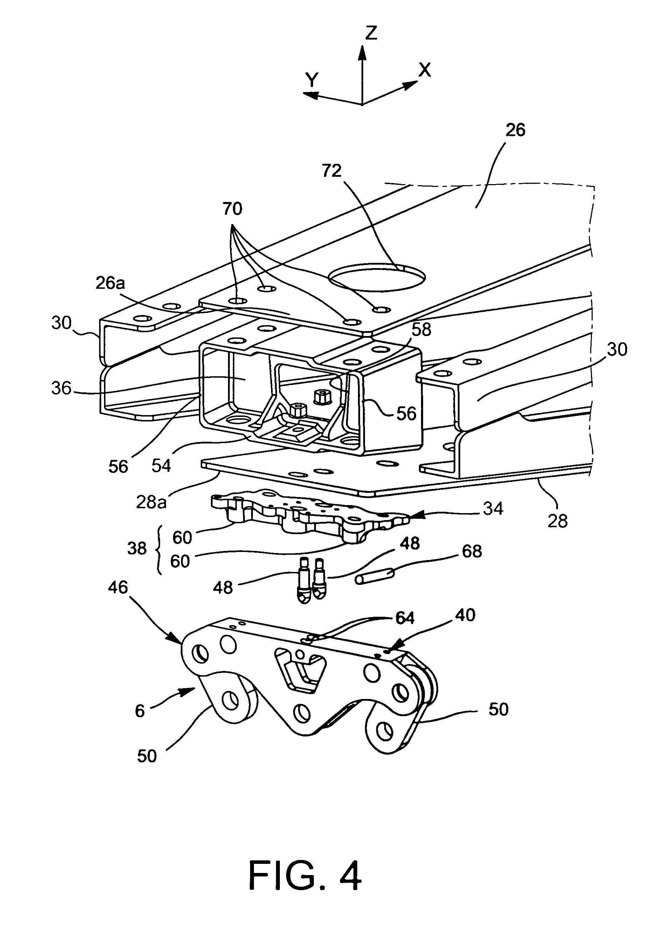

En référence à présent aux figures 3 à 6 montrant de façon plus détaillée la partie avant du mât 4, on peut voir que la nervure de fermeture avant 36 du caisson prend de préférence la forme d'un carré ou d'un rectangle, cette nervure 36 étant de préférence percée en son centre selon la direction X, et orientée selon un plan YZ. Naturellement, cette nervure 36 pourrait alternativement être pleine, sans sortir du cadre de l'invention.

Elle présente un flanc supérieur 52 au contact de l'extrémité avant 26a du longeron supérieur 26, ainsi qu'un flanc inférieur 54 au contact de l'extrémité avant 28a du longeron inférieur 28. De plus, elle présente deux flancs latéraux 56 au contact respectivement des deux panneaux latéraux 30, dont chacun peut être réalisé à l'aide de deux demi-longerons comme montré sur les figures 3, 4 et 6.

Alternativement, les deux éléments référencés 30 sur les figures peuvent être des semelles de support de panneaux latéraux rapportés sur celles-ci (mais non représentés), sans sortir du cadre de l'invention. Dans un tel cas, ces semelles 30 servent également au support du longeron inférieur 28 et du longeron supérieur 26 de la structure rigide, comme cela est visible sur les figures.

A titre indicatif, chacun des flancs latéraux 56 précités s'étend longitudinalement de part et d'autre d'un corps 58 de nervure, orienté transversalement.

La cale 34 est plaquée et au contact de la surface externe de l'extrémité avant 28a du longeron inférieur 28, sa surface inférieure comprenant par exemple quatre points d'appui 60 servant à définir la surface de fixation horizontale 38 de la structure rigide, contre laquelle la surface de fixation horizontale 40, définie par le corps d'attache 46 de l'attache moteur avant, est destinée à venir en contact. L'angle de la cale biaise 34 est fixé en fonction des besoins rencontrés, et typiquement de l'ordre de 5 à 15°. Naturellement, cet angle correspond également à celui entre le longeron inférieur et le plan XY comportant l'axe moteur 5.

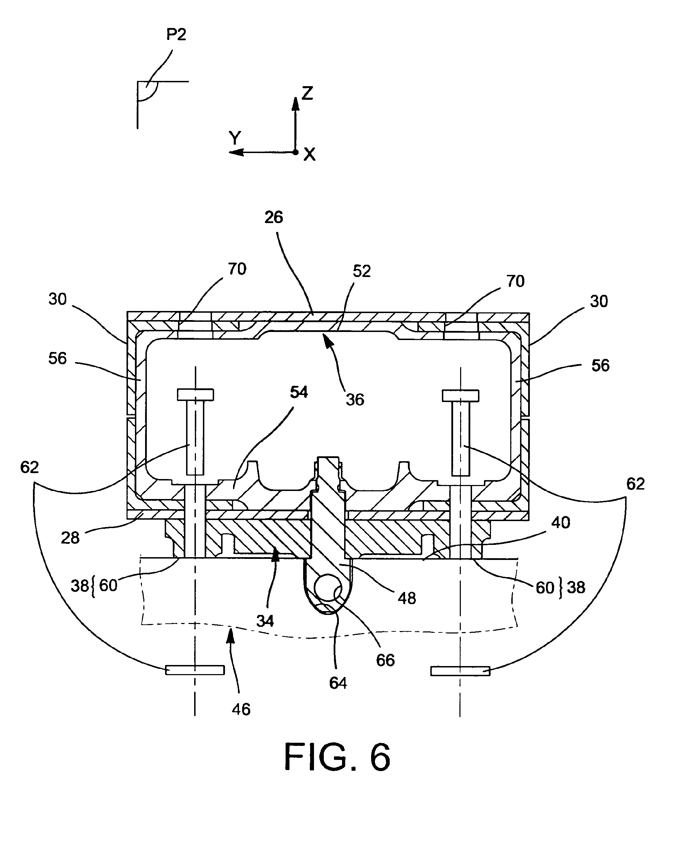

L'attache moteur avant comporte donc un corps d'attache 46 prenant la forme d'une ferrure ou d'une poutre orientée transversalement et rapportée solidairement sur la structure rigide 10, et donc plus précisément sur la surface de fixation horizontale 38 de la cale biaise 34. Cela s'effectue de préférence par l'intermédiaire de boulons de traction verticaux 62 traversant chacun successivement le corps d'attache 46, la cale biaise 34 au niveau d'un point d'appui 60, le longeron incliné 28, et le flanc inférieur 54 de la nervure de fermeture avant 36 du caisson. A titre indicatif, il est noté que ceux-ci peuvent également traverser l'extrémité de raccord du panneau latéral 30 ou semelle de support 30, plaquée entre le flanc inférieur 54 et l'extremité avant 28a du longeron inférieur, comme visible sur la figure 6.

Ainsi, il est de préférence prévu quatre boulons de traction verticaux 62 repartis de part et d'autre du corps de nervure 58, et chacun traversant l'un des quatre points d'appui 60 servant à définir la surface de fixation horizontale 38. Ces boulons 62 servent à transmettre les efforts s'exerçant selon la direction Z.

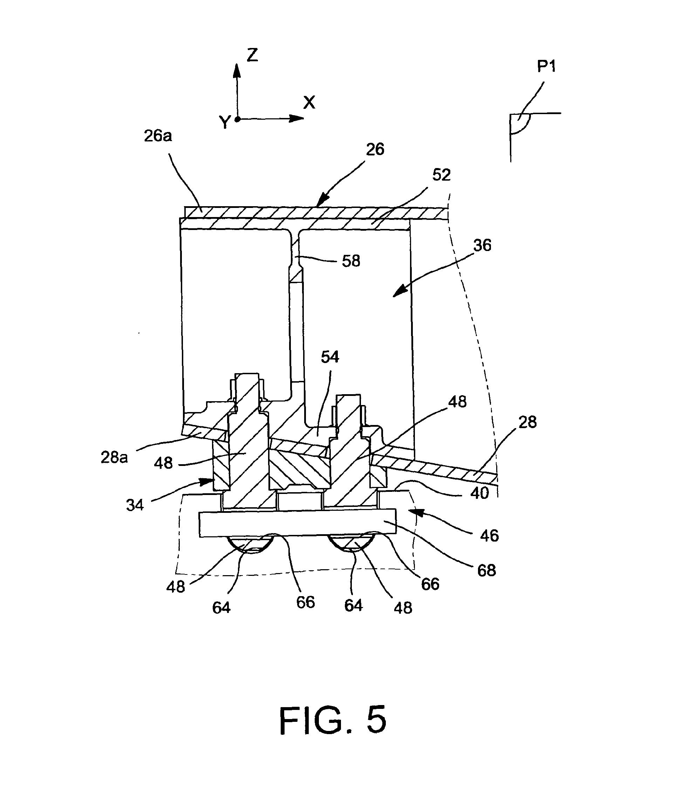

De plus, un pion de cisaillement vertical 48 traverse les éléments précités, et se situe dans un plan XZ, dénommé P1, correspondant à un plan de symétrie vertical pour la structure rigide 10, et plus généralement pour l'ensemble du mât d'accrochage. Il permet d'assurer la reprise des efforts selon la direction Y. Comme cela est montré sur les figures, il peut être prévu un second pion de cisaillement vertical 48, monté avec jeu de manière à assurer la transmission d'efforts uniquement en cas de défaillance du premier pion 48. Ainsi, il est capable d'assurer, en plus de la fonction de mise de position de la poutre 46 (indexage en rotation), la fonction dite « Fail Safe » de transmission des efforts selon la direction Y, en cas de défaillance survenant sur le chemin d'effort principal. Les deux pions 48, chacun logé dans un réceptacle 64 de la poutre 46, l'un avec jeu et l'autre sans jeu, sont de préférence situés de part et d'autre du corps de nervure 58, comme cela est le mieux visible sur la figure 5.

De plus, en partie inférieure, ils sont chacun équipé d'un orifice 66 orienté longitudinalement et traversé avec jeu par une même goupille 68 traversant également sans jeu la poutre 46. Par conséquent, ces pions de cisaillement 48 sont en outre capables d'assurer la fonction dite « Fail Safe » de transmission des efforts selon la direction Z, en cas de défaillance des boulons de traction 62. Cependant, aucun effort en Z ne transite par cette goupille 68 tant que le chemin d'effort principal dans cette direction, constitué par les boulons de traction 62, n'est pas défaillant.

Enfin, il est noté que des moyens de fixation classiques du type boulons peuvent être prévus pour assurer l'assemblage fixe de la cale 36 sur le longeron 28, avant la mise en place des boulons de traction 62 précités. En effet, il est noté que le procédé de montage de l'ensemble moteur consiste à amener le moteur 2 équipé du corps d'attache 46 de l'attache moteur avant 6, vers la structure rigide 10 équipée de la cale biaise 34, puis de mettre en place les boulons de traction verticaux 62 dans les orifices appropriés.

Au niveau de deux extrémités latérales du corps d'attache 46, l'attache moteur avant présente deux chapes au niveau desquelles sont articulées deux manilles/biellettes 50, chacune de ces dernières formant partiellement une demi-attache de l'attache avant à travers lesquelles peuvent transiter les efforts s'exerçant selon la direction Z. De façon connue de l'homme du métier, ces manilles 50 sont également articulées au niveau de leur autre extrémité sur des chapes appartenant également à l'attache avant 6, et étant rapportées fixement sur le carter de soufflante 12.

Dans ce mode de réalisation préféré, tel que cela est montré sur la figure 5, les extrémités avant 26a et 28a sont situées approximativement à un même niveau selon la direction X. Ainsi, pour permettre le serrage des boulons de traction 62, il est réalisé des puits 70 à travers la partie supérieure du caisson, chaque puits se trouvant dans l'alignement vertical de l'un de ces boulons 62. Par conséquent, pour serrer un boulon 62, l'opérateur peut introduire son outillage dans le puits 70 correspondant, traversant par exemple l'extrémité avant 26a du longeron supérieur, l'extrémité de raccord du panneau latéral ou semelle de support 30, et le flanc supérieur 52 de nervure comme montré sur la figure 6.

Enfin, il est noté que l'accès à l'intérieur du caisson est autorisé par la présence d'un trou d'homme 72 de plus grande dimension pratiqué sur le longeron supérieur 26, et agencé en arrière par rapport au corps 58 de la nervure de fermeture avant.

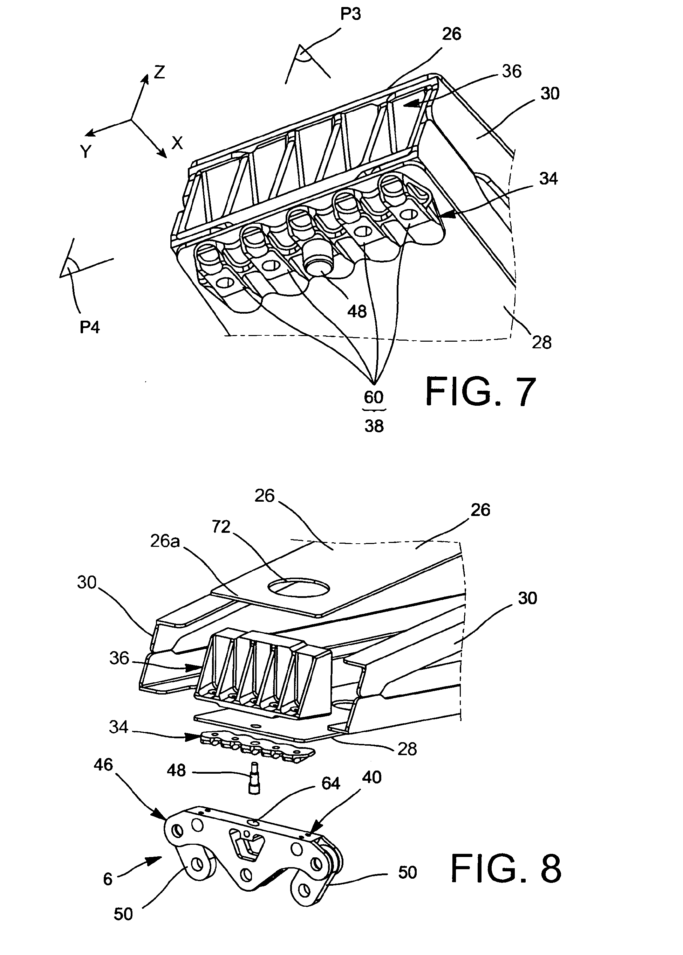

En référence à présent aux figures 7 à 10 montrant de façon détaillée la partie avant d'un mât 4 selon un autre mode de réalisation préféré de la présente invention, on peut voir que celui-ci présente une conception similaire à celle du mât exposé ci-dessus. A cet égard, les éléments portant les mêmes références numériques correspondent à des éléments identiques ou similaires.

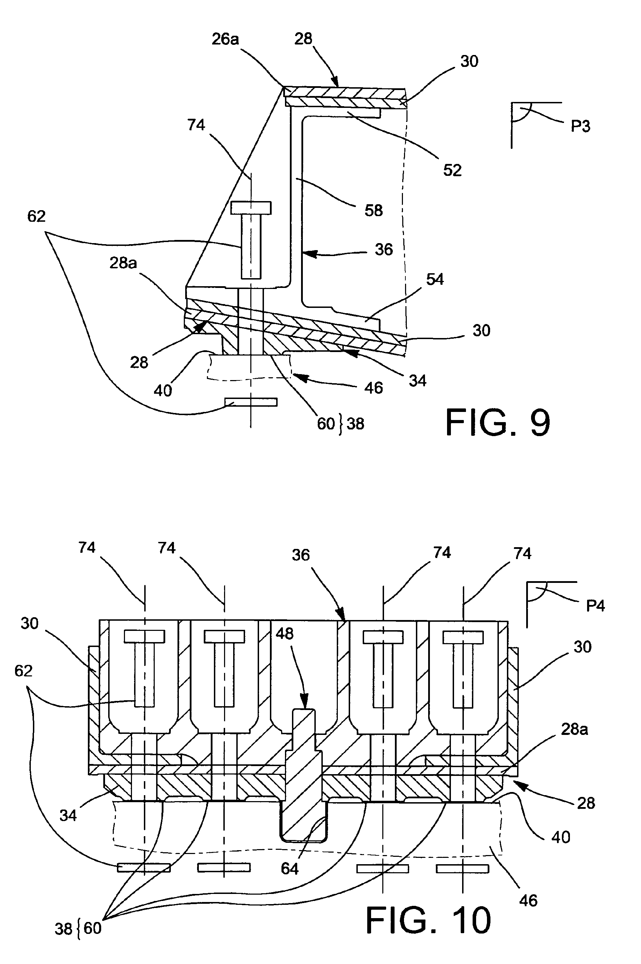

La principale différence réside dans le fait que l'extrémité avant 28a du longeron inférieur incliné 28 s'étend vers l'avant au-delà de l'extrémité avant 26a du longeron supérieur 26, comme le montre le mieux la figure 9. Ainsi, on prévoit que les quatre boulons de traction verticaux 62 sont tous agencés en avant par rapport au corps 58 de la nervure de fermeture avant 36, de sorte que les axes 74 de ces boulons 62 traversent l'extrémité avant 28a mais ne traversent pas l'extrémité avant 26a agencée plus en arrière. Cela permet à un opérateur de venir facilement réaliser le serrage des boulons 62 par le dessus, sans être gêné par le longeron supérieur 26, et surtout sans avoir à faire pénétrer l'outillage au travers de certains éléments du caisson. En particulier les puits 70 décrits précédemment ne sont plus nécessaires.

Les quatre boulons de traction 62 ne sont donc plus agencés de manière à former un carré ou un rectangle comme précédemment, mais sont alignés selon la direction Y dans le plan vertical P4, comme visible sur la figure 10. Par ailleurs, il est prévu au moins un pion de cisaillement vertical 48 dont le rôle est d'assurer la reprise des efforts s'exerçant selon la direction Y, ce pion 48 étant de préférence aligné avec les boulons 62, et toujours situé dans un plan XZ (non représenté) correspondant à un plan de symétrie vertical pour la structure rigide 10, et parallèle au plan vertical dénommé P3 traversant l'un des deux boulons de traction 62 situés respectivement aux extrémités de la ligne de fixation transversale.

Avec cette configuration dans laquelle le pion de cisaillement 48, logé dans un réceptacle 64 du corps d'attache 46, n'est préférentiellement pas équipé de la goupille 68 décrite précédemment, la fonction dite « Fail Safe » de transmission des efforts selon la direction Z est assurée par la capacité de chaque boulon 62 à faire transiter des efforts selon cette même direction.

Par ailleurs, il peut être prévu un montage avec ou sans jeu de l'un des boulons de traction vertical 62, de manière à assurer la transmission d'efforts selon la direction Y uniquement en cas de défaillance du pion unique 48. Ainsi, le boulon concerné est capable d'assurer la fonction dite « Fail Safe » de transmission des efforts selon la direction Y, en cas de défaillance survenant sur le chemin d'effort principal.

Bien entendu, diverses modifications peuvent être apportées par l'homme du métier à l'ensemble moteur 1 pour aéronef qui vient d'être décrit, uniquement à titre d'exemple non limitatif. A cet égard, on peut notamment indiquer que si l'ensemble moteur 1 a été présenté dans une configuration adaptée pour qu'il soit suspendu sous la voilure de l'aéronef, cet ensemble 1 pourrait également se présenter dans une configuration différente lui permettant d'être monté au-dessus de cette même voilure.

## Revendications

1. Mât d'accrochage (4) pour moteur (2) d'aéronef, ledit mât comportant une structure rigide (10) formant un caisson pourvu d'un longeron (28) incliné par rapport à l'horizontale, l'horizontale s'étendant selon la direction longitudinale du mât d'accrochage, ainsi qu'un système de montage du moteur (11) monté fixement sur ladite structure rigide (10) et comportant une attache moteur avant (6) comprenant un corps d'attache (46) pourvu d'une surface de fixation horizontale (40) plaquée contre une surface de fixation horizontale (38) de ladite structure rigide (10),
**caractérisé en ce que** ladite surface de fixation horizontale (38) de ladite structure rigide (10) est définie par une cale biaise (34) montée sur ledit longeron incliné (28), extérieurement par rapport audit caisson.

2. Mât d'accrochage (4) selon la revendication 1, **caractérisé en ce que** ladite structure rigide (10) comprend une nervure de fermeture avant (36) du caisson, des moyens de fixation (62) de la cale biaise sur ledit longeron incliné (28) traversant ladite nervure de fermeture avant (36).

3. Mât d'accrochage (4) selon la revendication 2, **caractérisé en ce que** lesdits moyens de fixation de la cale biaise sur ledit longeron incliné (28) comprennent des boulons de traction verticaux (62) traversant successivement le corps d'attache (46), la cale biaise (34), ledit longeron incliné (28) et la nervure de fermeture avant (36) du caisson.

4. Mât d'accrochage (4) selon la revendication 2 ou la revendication 3, **caractérisé en ce que** ladite attache moteur avant (6) comporte au moins un pion de cisaillement vertical (48) traversant successivement le corps d'attache (46), la cale biaise (34), ledit longeron incliné (28) et la nervure de fermeture avant (36) du caisson.

5. Mât d'accrochage (4) selon la revendication 4, **caractérisé en ce que** ledit longeron incliné (28) constitue un longeron inférieur dudit caisson.

6. Mât d'accrochage (4) selon la revendication 5 combinée a la revendication 2, **caractérisé en ce que** ladite nervure de fermeture avant (36) du caisson disposé d'un flanc inférieur (54) plaqué contre une extrémité avant (28a) du longeron inférieur incliné (28), et d'un flanc supérieur (52) plaqué contre une extrémité avant (26a) d'un longeron supérieur (26) de la structure rigide (10) formant caisson.

7. Mât d'accrochage (4) selon la revendication 6 combinée a la revendication 3, **caractérisé en ce que** ladite extrémité avant (28a) du longeron inférieur incliné (28) s'étend vers l'avant au-delà de ladite extrémité avant (26a) du longeron supérieur (26), les axes (74) desdits boulons de traction verticaux (62) étant tels qu'ils traversent ladite extrémité avant (28a) sans traverser ladite extrémité avant (26a).

8. Mât d'accrochage (4) selon l'une quelconque des revendications précédentes, **caractérisé en ce que** ladite attache moteur avant (6) est conçue de manière à assurer la reprise des efforts s'exerçant selon une direction transversale (Y) du mât, et selon la direction verticale (Z) de celui-ci.

9. Mât d'accrochage (4) selon l'une quelconque des revendications précédentes, **caractérisé en ce que** ledit système de montage du moteur (11) comporte en outre un dispositif de reprise des efforts de poussée (9), ainsi qu'une attache moteur arrière (8) conçue de manière à assurer la reprise des efforts s'exerçant selon des directions transversale (Y) et verticale (Z) du mât.

10. Mât d'accrochage (4) selon l'une quelconque des revendications précédentes, **caractérisé en ce que** ledit longeron incliné (28) est plan, d'un bout à l'autre de la structure rigide (10) selon une direction longitudinale (X) du mât.

11. Ensemble moteur (1) pour aéronef **caractérisé en ce qu'**il comprend un mât d'accrochage (4) selon l'une quelconque des revendications précédentes, ainsi qu'un moteur (2) monté fixement sur ledit mât.

12. Aéronef comprenant au moins un ensemble moteur (1) selon la revendication 11.

## Claims

1. Mounting pylon (4) for aircraft engine (2), said pylon comprising a rigid structure (10) forming a box provided with a spar (28) inclined from the horizontal, the horizontal extending along the longitudinal direction of said mounting pylon, and an engine mounting system (11) fixedly mounted on said rigid structure (10) and notably comprising a forward engine attachment (6) comprising an attachment body (46) provided with a horizontal securing surface (40) lying flat against a horizontal securing surface (38) of said rigid structure (10),
**characterized in that** said horizontal securing surface (38) of said rigid structure (10) is defined by a tapered shim (34) mounted on said inclined spar (28) externally relative to said box.

2. Pylon (4) according to claim 1, **characterized in that** said rigid structure (10) comprises a forward closing rib (36) of the box, means (62) to secure the tapered shim onto said inclined spar (28) passing through said forward closing rib (36).

3. Pylon according to claim 2, **characterized in that** said securing means for the tapered shim onto said inclined spar (28) comprise vertical tension bolts (62) successively passing through the attachment body (46), the tapered shim (34), said inclined spar (28) and the forward closing rib (36) of the box.

4. Pylon (4) according to claim 2 or claim 3, **characterized in that** said forward engine attachment (6) comprises at least one vertical shear pin (48) successively passing through the attachment body (46), the tapered shim (34), said inclined spar (28), and the forward closing rib (36) of the box.

5. Pylon (4) according to claim 4, **characterized in that** said inclined spar (28) forms a lower spar of said box.

6. Pylon (4) according to claim 5 combined with claim 2, **characterized in that** said forward closing rib (36) of the box has a lower sidewall (54) lying flat against a forward end (28a) of the inclined lower spar (28), and an upper sidewall (52) lying flat against a forward end (26a) of an upper spar (26) of the box-forming rigid structure (10).

7. Pylon (4) according to claim 6 combined with claim 3, **characterized in that** said forward end (28a) of the inclined lower spar (28) extends forwardly beyond said forward end (26a) of the upper spar (26), the axes (74) of said vertical tension bolts (62) being such that they pass through said forward end (28a) without passing through said forward end (26a).

8. Pylon (4) according to any of the preceding claims, **characterized in that** said forward engine attachment (6) is designed to ensure transmission of loads exerted in a transverse direction (Y) of the pylon, and in the vertical direction (Z) thereof.

9. Pylon (4) according to any of the preceding claims, **characterized in that** said engine mounting system (11) further comprises a device to transmit thrust loads (9), and an aft engine attachment (8) designed to ensure transmission of loads exerted in the transverse (Y) and vertical (Z) directions of the pylon.

10. Pylon (4) according to any of the preceding claims, **characterized in that** said inclined spar (28) is planar, from one end to the other of the rigid structure (10) in a longitudinal direction (X) of the pylon.

11. Aircraft engine assembly (1) **characterized in that** it comprises a mounting pylon (4) according to any of the preceding claims, and an engine (2) fixedly mounted on said pylon.

12. Aircraft comprising at least one engine assembly (1) according to claim 11.

## Patentansprüche

1. Aufhängungssystem (4) für ein Luftfahrzeugtriebwerk (2), umfassend eine starre Struktur (10), die einen Kasten bildet, der einen in Bezug auf die Horizontale geneigten Längsträger (28) aufweist, wobei sich die Horizontale in der Längsrichtung des Aufhängungssystems erstreckt, sowie ein Triebwerkanbringungssystem (11), das fest an der starren Struktur (10) angebracht ist und eine vordere Triebwerkaufhängung (6) aufweist, die einen Halterungskörper (46) umfasst, der eine horizontale Befestigungsoberfläche (40) aufweist, die auf einer horizontalen Befestigungsoberfläche (38) der starren Struktur (10) angesetzt ist,
**dadurch gekennzeichnet, dass** die horizontale Befestigungsoberfläche (38) der starren Struktur (10) durch ein schräges Passstück (34) festgelegt ist, das in den Bezug auf den Kasten außen an dem geneigten Längsträger (28) angebracht ist.

2. Aufhängungssystem (4) nach Anspruch 1, **dadurch gekennzeichnet, dass** die starre Struktur (10) eine vordere Verschlussrippe (36) des Kastens umfasst, wobei Befestigungsmittel (62) für das schräge Passstück an dem geneigten Längsträger (28) durch die vordere Verschlussrippe (36) hindurchgehen.

3. Aufhängungssystem (4) nach Anspruch 2, **dadurch gekennzeichnet, dass** die Befestigungsmittel für das schräge Passstück an dem geneigten Längsträger (28) vertikale Zugbolzen (62) umfassen, die nacheinander durch den Halterungskörper (46), das schräge Passstück (34), den geneigten Längsträger (28) und die vordere Verschlussrippe (36) des Kastens hindurchgehen.

4. Aufhängungssystem (4) nach Anspruch 2 oder Anspruch 3, **dadurch gekennzeichnet, dass** die vordere Triebwerkaufhängung (6) mindestens einen vertikalen Sicherungsbolzen (48) aufweist, der nacheinander durch den Halterungskörper (46), das schräge Passstück (34), den geneigten Längsträger (28) und die vordere Verschlussrippe (36) des Kastens hindurchgeht.

5. Aufhängungssystem (4) nach Anspruch 4, **dadurch gekennzeichnet, dass** der geneigte Längsträger (28) einen unteren Längsträger des Kastens bildet.

6. Aufhängungssystem (4) nach Anspruch 5 in Kombination mit Anspruch 2, **dadurch gekennzeichnet, dass** die vordere Verschlussrippe (36) des Kastens einen unteren Flansch (54), der auf einem vorderen Ende (28a) des geneigten unteren Längsträgers (28) angesetzt ist, und einen oberen Flansch (52), der auf einem vorderen Ende (26a) eines oberen Längsträgers (26) der einen Kasten bildenden starren Struktur (10) angesetzt ist, aufweist.

7. Aufhängungssystem (4) nach Anspruch 6 in Kombination mit Anspruch 3, **dadurch gekennzeichnet, dass** sich das vordere Ende (28a) des geneigten unteren Längsträgers (28) nach vorne über das vordere Ende (26a) des oberen Längsträgers (26) hinaus erstreckt, wobei die Achsen (74) der vertikalen Zugbolzen (62) durch das vordere Ende (28a) hindurchgehen, ohne durch das vordere Ende (26a) hindurchzugehen.

8. Aufhängungssystem (4) nach einem der vorhergehenden Ansprüche, **dadurch gekennzeichnet, dass** die vordere Triebwerkaufhängung (6) derart gestaltet ist, dass die Aufnahme von Kräften, die in einer Transversalrichtung (Y) des Systems und in der Vertikalrichtung (2) desselben auftreten, gewährleistet ist.

9. Aufhängungssystem (4) nach einem der vorhergehenden Ansprüche, **dadurch gekennzeichnet, dass** das Triebwerkanbringungssystem (11) ferner eine Vorrichtung zur Aufnahme von Schubkräften (9) sowie eine hintere Triebwerkaufhängung (8), die derart gestaltet ist, dass die Aufnahme von Kräften, die in Transversalrichtung (Y) und Vertikalrichtung (Z) des Systems auftreten, gewährleistet ist, aufweist.

10. Aufhängungssystem (4) nach einem der vorhergehenden Ansprüche, **dadurch gekennzeichnet, dass** der geneigte Längsträger (28) von einem Ende der starren Struktur (10) zum anderen in Längsrichtung (X) des Systems plan ist.

11. Triebwerkanordnung (1) für ein Luftfahrzeug, **dadurch gekennzeichnet, dass** sie ein Aufhängungssystem (4) nach einem der vorhergehenden Ansprüche sowie ein fest an dem System angebrachtes Triebwerk (2) umfasst.

12. Luftfahrzeug, das mindestens eine Triebwerkanordnung (1) nach Anspruch 11 umfasst.
